# EUROPÄISCHE PATENTSCHRIFT

(11) **EP 4 046 975 B1**
(45) Veröffentlichungstag und Bekanntmachung des Hinweises auf die Patenterteilung: **02.04.2025**
(21) Anmeldenummer: 22157138.3
(22) Anmeldetag: 16.02.2022
(51) Int. Cl.: C04B 28/02

(54) **BETONMISCHUNG UND VERFAHREN ZUM HERSTELLEN**
CONCRETE COMPOUND AND METHOD FOR PRODUCING THE SAME
MÉLANGE DE BÉTON ET PROCÉDÉ DE FABRICATION

(30) Priorität: 22.02.2021 EP 21158498
(43) Veröffentlichungstag der Anmeldung: 24.08.2022
(73) Patentinhaber: Vigier Management AG, 4542 Luterbach (CH)
(72) Erfinder: Stettler, Bruno, 4936 Kleindietwil (CH)
(74) Vertreter: AMMANN PATENTANWÄLTE AG

(56) Entgegenhaltungen:
- EP-A1- 2 272 598
- WO-A1-2010/102675
- CN-A- 106 278 063
- CN-A- 107 902 985
- CN-A- 111 205 021
- ANASTASIOU E K ET AL: "Life Cycle Assessment of Concrete Products for Special Applications Containing EAF Slag", PROCEDIA ENVIRONMENTAL SCIENCES, ELSEVIER, AMSTERDAM, NL, vol. 38, 11 April 2017 (2017-04-11), pages 469 - 476, XP029974106, ISSN: 1878-0296, DOI: 10.1016/J.PROENV.2017.03.138
- SHARBA AMJAD A: "The Efficiency of Steel Slag and Recycled Concrete Aggregate on the Strength Properties of Concrete", KSCE JOURNAL OF CIVIL ENGINEERING, KOREAN SOCIETY OF CIVIL ENGINEERS, HEIDELBERG, vol. 23, no. 11, 16 October 2019 (2019-10-16), pages 4846 - 4851, XP036909238, ISSN: 1226-7988, [retrieved on 20191016], DOI: 10.1007/S12205-019-0700-3
- PELLEGRINO ET AL: "Chapter 5: Sustainability of Recycled Concretes Through Life Cycle Assessment", 1 January 2016 (2016-01-01), XP009529161, ISSN: 1865-3529, ISBN: 978-1-84996-519-4, Retrieved from the Internet <URL:http://link.springer.com/10.1007/978-3-319-28540-5_5> [retrieved on 20161002]
- RONDI LUCA ET AL: "Concrete with EAF steel slag as aggregate: A comprehensive technical and environmental characterisation", COMPOSITES: PART B, ELSEVIER, AMSTERDAM , NL, vol. 90, 7 January 2016 (2016-01-07), pages 195 - 202, XP029451172, ISSN: 1359-8368, DOI: 10.1016/J.COMPOSITESB.2015.12.022

## Beschreibung

Die Erfindung betrifft eine Betonmischung nach dem Oberbegriff des Patentanspruchs 1 und ein Verfahren zum Herstellen einer Betonmischung.

Generell enthält eine Betonmischung zu etwa drei Viertel Gesteinskörnungen, Zement, Wasser und Betonverflüssiger. Unter den Begriff Gesteinskörnungen fallen sowohl natürliche Kiese und Sande als auch industriell hergestellte Körnungen einschliesslich rezyklierte Materialien, die beispielsweise beim Abbruch von Bauwerken gewonnen werden. Eine Möglichkeit zur Unterscheidung von Betonmischungen nach Gruppen ist wie folgt:
- Gruppe 1: Beton mit Primärkies
- Gruppe 2: Beton mit Recyclingbetongranulat
- Gruppe 3: Beton mit Mischabbruchgranulat

Mischabbruch ist ein Gemisch von ausschliesslich mineralischen Bauabfällen von Massivbauteilen wie Beton, Backstein-, Kalksandstein- und Natursteinmauerwerk. Zur Weiterverwendung in Beton wird der Mischabbruch zu einem Granulat aufbereitet.

Verschiedene nationale Verordnungen sehen vor, dass bei der Wiederverwendung von Material aus Abbruch-Objekten ein so genanntes Downrecycling zu vermeiden ist. Das bedeutet, dass ein möglicherweise problematischer Bestandteil wie beispielsweise Schlacke nicht mit einem derzeit als unproblematisch geltenden Bestandteil wie Primärkies oder reinem Recyclingbeton vermischt werden soll. Aufgrund der durch Beton der Gruppe 3 bisher erreichten Eigenschaften kann dieser derzeit nicht für anspruchsvollere Aufgaben, beispielsweise im Hochbau verwendet werden.

Das Deutsche Gebrauchsmuster DE202018105762U1 beschreibt eine Betonmischung, die nebst Zement auch Materialien aus rezyklierten Bauabfällen, keramischen Abfällen und Nebenprodukte aus der Erzeugung von Stahl enthält. Der zuletzt genannte Begriff ist in der Beschreibung des Dokuments mit "Stahlwerkschlacke" präzisiert. Bei den beschriebenen Ausführungsbeispielen ist jeweils die mit der betreffenden Betonmischung erreichte Festigkeit umschrieben.

Das Dokument EP 1 328 488 B1 betrifft ebenfalls die Herstellung von Beton mittels Mischabbruch, im Dokument als "Bauschutt" bezeichnet.

Da der Anteil an verfügbarem Mischabbruch zunehmend ist, besteht der Wunsch, Betonmischungen der Gruppe 3 auch für Anwendungen beispielsweise im Hochbau einzusetzen, die bisher Beton der Gruppen 1 und 2 vorbehalten sind.

Die Anmeldung CN107902985 A betrifft die Herstellung eines dekorativen Pflasterprodukts aus Zement, Stahlschlacke und Bau-Recyclingmaterial.

Die Anmeldung CN106278063 A betrifft die Herstellung eines Baumörtels.

E. K. Anastasiou et al. "Life Cycle Assessment of Concrete Products for Special Applications Containing EAF Slag", Procedia Environmental Sciences Vol. 38, 2017, Seiten 469 - 476, untersuchen den Lebenszyklus von Betonprodukten hergestellt aus Elektroofenschlacke.

Amjad A. Sharba "The Efficiency of Steel Slag and Recycled Concrete Aggregate on the Strength Properties of Concrete", KSCE Journal of Civil Engineering, Korean Society of Civil Engineers, Vol. 23(11), 2019, Seiten 4846 - 4851, untersucht die Festigkeitseigenschaften von Beton, welcher aus Stahlschlacke und rezyklierten Betonzuschlagstoffen hergestellt wird.

C. Pellegrino und F. Faleschini "Chapter 5: Sustainability of Recycled Concretes Through Life Cycle Assessment", Seiten 107 - 140 in "Sustainability Improvements in the Concrete Industry" Springer International Publishing AG 2016 bewerten anhand einer Lebenszyklusanalyse die Rezyklierung von Material für die Herstellung von Konstruktionsbeton.

Ausgehend von diesem Stand der Technik liegt der Erfindung die Aufgabe zugrunde, Betonmischungen der Gruppe 3 vorzuschlagen, die ähnliche Festigkeitseigenschaften erreichen wie Betonmischungen der Gruppen 1 und 2.

Diese Aufgabe wird erfindungsgemäss durch die im kennzeichnenden Teil des Patentanspruchs 1 angegebenen Merkmale sowie ein Verfahren zum Herstellen eines Betons mit einer solchen Mischung gelöst.

Das Gewichtsverhältnis von Elektroofenschlackengranulat zu Mischabbruchgranulat liegt vorzugsweise zwischen 1:1 und 2:1.

Stahlwerkschlacke wird unterteilt in LD-Schlacke und Elektroofenschlacke.

Elektroofenschlacke (kurz EOS) entsteht bei der Verhüttung von Stahlschrott im Elektrolichtbogenofen. Sie wird aus Zuschlägen wie Kalkstein oder Dolomit gebildet und enthält darüber hinaus Bestandteile, die unter den Bedingungen des Prozesses oxidieren. Gegenüber der LD-Schlacke hat die Elektroofenschlacke weniger Calciumoxid, mehr Magnesiumoxid, weniger Phosphorpentoxid und etwas mehr Mangandioxid.

Die erfindungsgemässen Lösungen haben insbesondere den Vorteil, dass damit ein Beton geschaffen werden kann, der den Anwendungsbereich von Beton mit Mischabbruch wesentlich erweitert.

Ausführungsbeispiele der Erfindung werden nachstehend erläutert.

Als Vergleichsbasis für die nachfolgenden Beispiele dient ein Beton vom Typ A265-M in der Versuchsart Produktion mit Zement CEM II A-LL 42.5 R (Portlandkalksteinzement nach DIN EN 197-1), enthaltend ausschliesslich Mischgranulat (im Folgenden als MG bezeichnet), 1.30 % Verflüssiger, mit einem Wasserzementwert (im Folgenden als w/z bezeichnet) von 0.54 und einem Setzfliessmass von 720 [mm]. Damit wurde eine Rohdichte von 2046 [kg/m³], eine Druckfestigkeit nach 28 Tagen von 37 [N/mm²] und ein Elastizitätsmodul von 21000 [N/mm²] erreicht.

Für alle nachfolgend beschriebenen Beispiele wurde die Zementart CEM II B-LL 32.5 R (Portlandkalksteinzement nach DIN EN 197-1) eingesetzt, die im Unterschied zum vorher erwähnten CEM II A-LL 42 5 R weniger Portlandzementklinker und mehr Kalkstein enthält. Dadurch wird in der Herstellungskette CO₂ eingespart. Der eingesetzte Verflüssiger ist vom Typ ViscoCrete-4097 von Sika. Ausserdem wurde Primärsand mit einem Anteil von maximal 25 % der Gesteinskörnung zugesetzt.

### Beispiel 1

| Versuchsart | Labor |
|---|---|
| Verhältnis EOS:MG nach Gewicht | 2:1 |
| Verhältnis EOS:MG nach Volumen (% der Gesteinskörnung) | 42:33 |
| Verflüssiger [% des Zementgehalts] | 1.2 |
| w/z | 0.42 |
| Setzfliessmass [mm] | 660 |
| E-Modul [N/mm²] | 30900 |
| Druckfestigkeit 28 d [N/mm²] | 54.3 |
| Rohdichte [kg/m³] | 2424 |

### Beispiel 2

| Versuchsart | Labor |
|---|---|
| Verhältnis EOS:MG nach Gewicht | 1:1 |
| Verhältnis EOS:MG nach Volumen (% der Gesteinskörnung) | 29:46 |
| Verflüssiger [% des Zementgehalts] | 1.2 |
| w/z | 0.46 |
| Setzfliessmass [mm] | 730 |
| E-Modul [N/mm²] | 30700 |
| Druckfestigkeit 28 d [N/mm²] | 57.2 |
| Rohdichte [kg/m³] | 2379 |

### Beispiel 3

| Versuchsart | Labor |
|---|---|
| Verhältnis EOS:MG nach Gewicht | 3:2 |
| Verhältnis EOS:MG nach Volumen (% der Gesteinskörnung) | 36.5:38.5 |
| Verflüssiger [% des Zementgehalts] | 1.2 |
| w/z | 0.45 |
| Setzfliessmass [mm] | 690 |
| E-Modul [N/mm²] | 29400 |
| Druckfestigkeit 28 d [N/mm²] | 54.4 |
| Rohdichte [kg/m³] | 2424 |

### Beispiel 4

| Versuchsart | Labor |
|---|---|
| Verhältnis EOS:MG nach Gewicht | 3:2 |
| Verhältnis EOS:MG nach Volumen (% der Gesteinskörnung) | 36.5:38.5 |
| Verflüssiger [% des Zementgehalts] | 0.8 |
| w/z | 0.48 |
| Setzfliessmass [mm] | 690 |
| E-Modul [N/mm²] | 26900 |
| Druckfestigkeit 28 d [N/mm²] | 47.5 |
| Rohdichte [kg/m³] | 2405 |

### Beispiel 5

| Versuchsart | Produktion |
|---|---|
| Verhältnis EOS:MG nach Gewicht | 3:2 |
| Verhältnis EOS:MG nach Volumen (% der Gesteinskörnung) | 36.5:38.5 |
| Verflüssiger [% des Zementgehalts] | 0.8 |
| w/z | 0.48 |
| Setzfliessmass [mm] | 680 |
| E-Modul [N/mm²] | 25600 |
| Druckfestigkeit 28 d [N/mm²] | 42.1 |
| Rohdichte [kg/m³] | 2300 |

### Beispiel 6

| Versuchsart | Produktion |
|---|---|
| Verhältnis EOS:MG nach Gewicht | 3:2 |
| Verhältnis EOS:MG nach Volumen (% der Gesteinskörnung) | 36.5:38.5 |
| Verflüssiger [% des Zementgehalts] | 1.1 |
| w/z | 0.45 |
| Setzfliessmass [mm] | 650 |
| E-Modul [N/mm²] | 26400 |
| Druckfestigkeit 28 d [N/mm²] | 46.0 |
| Rohdichte [kg/m³] | 2361 |

Die eingesetzten Gesteinskörnungen entsprechen alle der Europäischen Norm SN 670102b-NA (EN 12620:2002 /A1:2008) und der erhaltene Beton kann nach der Norm EN 206 :2013+A1:2016 zertifiziert werden.

Wie man sieht, beeinflusst das Verhältnis Mischgranulat zu Elekroofenschlacke die Festbetoneigenschaften, insbesondere das E-Modul. Das E Modul kann um ca. 25 % gesteigert werden gegenüber dem herkömmlichen RCM Beton.

Die erreichten Eigenschaften des Betons werden aber auch massgeblich durch das Herstellungsverfahren, insbesondere den Mischprozess beeinflusst. Im Folgenden wird ein Beispiel beschrieben.

Zunächst werden die Komponenten wie folgt dosiert. Mischabbruchgranulat und Elektroofenschlackengranulat in Kilogramm mittels einer Komponentenwaage, Zement in Kilogramm über eine Zementwaage, Anmachwasser in Liter über eine Wasserwaage und Fliessmittel in Kilogramm beziehungsweise Gramm über eine Zusatzmittelwaage.

Anschliessend werden das Mischabbruchgranulat und das Elektroofenschlackengranulat in einem Mischer trocken während 5 Sekunden gemischt, dann wird der Zement beigegeben und weitere 15 Sekunden trocken gemischt.

In einem weiteren Schritt wird Wasser dazugegeben und während 25 Sekunden gemischt. Durch Beigabe von Korrekturwasser und mischen während weiterer 25 Sekunden wird das Ausbreitmass auf 400 mm eingestellt.

Schliesslich wird Fliessmittel dazu gegeben, 50 Sekunden weiter gemischt, bis eine Konsistenz SF2 erreicht ist. Eine Konsistenz der Klasse SF2 entspricht einem Setzfliessmass von 660 bis 720 mm

Das Einhalten der Mischanweisung erlaubt eine gute Benetzung der Körnungen und des Zementes, und die wichtige Wasserabsorption, damit kann eine Absorption des Fliessmittels verhindert werden. Mit dieser aufwändig ausgetesteten Reihenfolge, der Einhaltung der Schritte und Mischzeiten kann eine stabile Konsistenz und ein gleichbleibender Wasser Zementwert erreicht werden.

## Patentansprüche

1. Betonmischung enthaltend Gesteinskörnungen mit Mischabbruchgranulat und Schlackengranulat, Zement, Wasser und Betonverflüssiger, **dadurch gekennzeichnet, dass** die Gesteinskörnungen zu mindestens 75 Volumenprozent aus Mischabbruchgranulat und Schlackengranulat bestehen, dass das Schlackengranulat Elektroofenschlackengranulat ist und das Gewichtsverhältnis von Elektroofenschlackengranulat zu Mischabbruchgranulat in einem Bereich von minimal 1:1 bis maximal 2:1 liegt.

2. Betonmischung nach Anspruch 1, **dadurch gekennzeichnet, dass** der Anteil des Betonverflüssigers in einem Bereich von minimal 0.8 bis maximal 1.5 Gewichtsprozent des Zementgehalts liegt.

3. Betonmischung nach einem der vorangehenden Ansprüche, **dadurch gekennzeichnet, dass** der Wasser/Zementwert in einem Bereich von minimal 0.40 bis maximal 0.48 liegt.

4. Betonmischung nach einem der vorangehenden Ansprüche, **dadurch gekennzeichnet, dass** der Zement der Klasse CEM II B-LL angehört.

5. Verfahren zum Herstellen einer Betonmischung nach einem der Ansprüche 1 bis 4, wobei zunächst Mischabbruchgranulat und Elektoofenschlackengranulat in einen Mischer gegeben und während 4 bis 6 Sekunden trocken gemischt wird, dann der Zement dazu gegeben und während weiteren 13 bis 17 Sekunden gemischt wird, anschliessend Wasser zugegeben und während weiteren 20 bis 30 Sekunden gemischt wird, danach Korrekturwasser zugegeben wird, bis das Ausbreitmass 380 bis 420 mm beträgt und weitere 20 bis 30 Sekunden gemischt wird und schliesslich unter Zugabe von Fliessmittel eine einem Setzfliessmass von 660 bis 720 mm entsprechenden Konsistenz der Klasse SF2 eingestellt wird, während weitere 40 bis 60 Sekunden gemischt wird.

## Claims

1. Concrete mix containing aggregates with mixed demolition granulate and slag granulate, cement, water and concrete plasticizer, **characterized in that** the aggregates consist of at least 75 percent by volume of mixed demolition granulate and slag granulate, that the slag granulate is electric arc furnace slag granulate and the weight ratio of electric arc furnace slag granulate to mixed demolition granulate is in a range from a minimum of 1:1 to a maximum of 2:1.

2. Concrete mix according to claim 1, **characterized in that** the proportion of the concrete plasticizer is in a range from a minimum of 0.8 to a maximum of 1.5 percent by weight of the cement content.

3. Concrete mix according to any one of the preceding claims, **characterized in that** the water/cement ratio is in the range from a minimum of 0.40 to a maximum of 0.48.

4. Concrete mix according to any one of the preceding claims, **characterized in that** the cement belongs to the class CEM II B-LL.

5. Method for producing a concrete mix according to any one of the claims 1 to 4, wherein first of all mixed demolition granulate and electric arc furnace slag granulate are put into a mixer and dry-mixed for 4 to 6 seconds, then the cement is added and mixed for a further 13 to 17 seconds, then water is added and mixed for a further 20 to 30 seconds, then correction water is added until the slump flow is between 380 and 420 mm and mixed for a further 20 to 30 seconds, and finally, by adding superplasticizer, a consistency of class SF2 corresponding to a slump-flow spread of 660 to 720 mm is set, while mixing for a further 40 to 60 seconds.

## Revendications

1. Mélange de béton contenant des granulats avec des granulats de démolition mixtes et des granulats de laitier, du ciment, de l'eau et du plastifiant pour béton, **caractérisé en ce que** les granulats sont constitués d'au moins 75 % en volume de granulats de démolition mixtes et de granulats de laitier, **en ce que** les granulats de laitier sont des granulats de laitier de four électrique et **en ce que** le rapport pondéral entre les granulats de laitier de four électrique et les granulats de démolition mixtes se situe dans une plage de 1:1 minimum à 2:1 maximum.

2. Mélange de béton selon la revendication 1, **caractérisé en ce que** la proportion du plastifiant pour béton se situe dans une plage de 0.8 % minimum à 1.5 % maximum en poids de la teneur en ciment.

3. Mélange de béton selon l'une des revendications précédentes, **caractérisé en ce que** le rapport eau-ciment se situe dans une plage de 0.40 minimum à 0.48 maximum.

4. Mélange de béton selon l'une des revendications précédentes, **caractérisé en ce que** le ciment appartient à la classe CEM II B-LL.

5. Procédé de fabrication d'un mélange de béton selon l'une des revendications 1 à 4, dans lequel des granulats de démolition mixtes et des granulats de laitier de four électrique sont d'abord ajoutés dans un mélangeur et mélangés à sec pendant 4 à 6 secondes, puis le ciment est ajouté et mélangé pendant 13 à 17 secondes supplémentaires, puis de l'eau est ajoutée et mélangée pendant 20 à 30 secondes supplémentaires, puis de l'eau de correction est ajoutée jusqu'à ce que la mesure d'étalement atteigne 380 à 420 mm et mélangée pendant 20 à 30 secondes supplémentaires et enfin une consistance de classe SF2 est obtenue correspondant à une mesure d'affaissement fluide de 660 à 720 mm en ajoutant un superplastifiant, et mélangé pendant 40 à 60 secondes supplémentaires.
